# FASCICULE DE BREVET EUROPEEN

(11) **EP 1 769 957 B1**
(45) Date de publication et mention de la délivrance du brevet: **12.11.2008**
(21) Numéro de dépôt: 06121587.7
(22) Date de dépôt: 29.09.2006
(51) Int. Cl.: B60J 7/00

(54) **Store à enrouleur pour véhicule automobile, à ourlet de mise en forme, véhicule automobile et procédé de fabrication correspondants**
Sonnenschutzrollo für Kraftfahrzeuge und dazugehöriges Verfahren zur Herstellung
Roller blind for automotive vehicles and corresponding manufacturing method

(30) Priorité: 30.09.2005 FR 0510041
(43) Date de publication de la demande: 04.04.2007
(73) Titulaire: Wagon SAS, 79302 Bressuire Cédex (FR)
(72) Inventeur: Cousson, François, 79430 LA CHAPELLE SAINT-LAURENT (FR); Devanne, Christophe, 79300 CHAMBROUTET (FR)
(74) Mandataire: Bioret, Ludovic

(56) Documents cités:
- WO-A-98/00302
- FR-A- 2 866 274
- US-A- 6 161 893
- US-B1- 6 186 587
- PATENT ABSTRACTS OF JAPAN vol. 013, no. 052 (M-794), 7 février 1989 (1989-02-07) -& JP 63 258213 A (ASHIMORI IND CO LTD), 25 octobre 1988 (1988-10-25)

## Description

### 1. Domaine de l'invention

Le domaine de l'invention est celui des stores à enrouleur pour véhicule automobile.

Plus précisément, l'invention concerne les stores à enrouleur destinés à prendre, dans la position déployée, un galbe imprimé par une ou plusieurs baleines.

Un domaine d'application privilégié de l'invention est celui des stores pour pavillon vitré. En effet, dans ce cas, il est nécessaire de prévoir des baleines d'une part pour soutenir la toile, et d'autre part pour faire en sorte que celle-ci suive le plus possible la forme du pavillon, de façon à ne pas réduire l'espace intérieur.

### 2. Art antérieur

On équipe depuis longtemps les véhicules automobiles de store à enrouleur, notamment pour protéger l'habitacle de la lumière et du soleil. On a ainsi souvent proposé des stores de vitre latérale ou de custode. Plus récemment, du fait de l'apparition des pavillons vitrés et des pare-brises de grande dimension, des techniques particulières ont été développées, prévoyant la présence de baleines pour maintenir la toile. Cette technique a également été mise en oeuvre dans les cache-bagages.

Les baleines sont généralement constituées de tiges ou de barres rigides, s'étendant parallèlement au tube enrouleur. Les extrémités de ces baleines sont généralement guidées dans des rails, également utilisés par la barre de tirage, de façon à soutenir la toile, et éviter qu'elle forme une poche, qui serait à la fois inesthétique et non ergonomique, comme montré par example dans le document US 6 186 587.

Dans un premier temps, ces baleines étaient rectilignes, et la toile déployée était donc sensiblement plane. Il est ensuite apparu souhaitable de disposer de baleines galbées, capables d'imprimer un galbe, pour que la toile suive au plus près le galbe du pavillon.

Plusieurs techniques ont été proposées, basées soit sur des baleines préformées avec un galbe, ce qui pose un problème lors de l'enroulement, soit sur des baleines flexibles, guidées par exemple par des rails se rapprochant l'un de l'autre pour obliger la baleine à se galber.

Cette dernière technique est relativement complexe, tant en ce qui concerne la fabrication des baleines que celle des rails. La forme et le matériau utilisé pour les baleines doivent être adaptés. En outre, du fait de la forme des rails, des risques de blocage peuvent apparaître.

### 3. Objectifs de l'invention

L'invention a notamment pour objectif de pallier ces différents inconvénients de l'art antérieur.

Plus précisément, l'invention a pour objectif de fournir un store à enrouleur pour véhicule automobile équipé de baleines aptes à imprimer un galbe à la toile, et qui soit simple et facile à réaliser et à mettre en oeuvre.

Ainsi, un objectif de l'invention est de fournir un tel store à enrouleur, qui ne nécessite pas de baleine flexible particulière ni de configuration particulière des rails de guidage.

Un autre objectif de l'invention est de fournir un tel store à enrouleur qui ne présente pas de difficulté lors de l'enroulement de la toile, et en particulier qui n'induit pas une surépaisseur trop importante de l'ensemble à enrouler.

L'invention a encore pour objectif de fournir un tel store à enrouleur, qui soit peu coûteux à réaliser et à monter, et qui ne nécessite pas d'équipement de fabrication particulier.

### 4. Exposé de l'invention

Ces objectifs, ainsi que d'autres qui apparaîtront par la suite, sont atteints à l'aide d'un store à enrouleur pour véhicule automobile, comprenant une toile d'occultation montée sur un tube enrouleur, dont, selon l'invention, la toile est constituée d'au moins deux portions de toile assemblées entre elles par des coutures le long de l'un de leurs bords, et les coutures définissent une courbe, de façon à galber la toile, dans sa position déployée.

En d'autres termes, les coutures ne s'étendent pas de façon rectiligne, mais forment, dans le plan de chacune des parties de toile, une courbe qui peut avantageusement être un arc de cercle, ou plus généralement un arc.

Ainsi, selon l'invention, ce sont les coutures ou l'ourlet qui induisent un galbe, et non la baleine seule. Comme on le verra par la suite, une baleine peut en outre contribuer à amplifier ce galbe.

Selon un mode de réalisation préférentiel, les coutures forment un ourlet définissant un logement incurvé, et une baleine est insérée dans ce logement.

Cette approche est particulièrement simple et efficace, puisque l'ourlet peut être réalisé rapidement à l'aide de deux coutures, et que la baleine n'a pas à présenter de caractéristique particulière.

De façon avantageuse, la baleine est rectiligne, de façon que la combinaison du logement incurvé et de la baleine rectiligne renforce le galbe de la toile, dans sa position déployée.

Une telle baleine est bien sûr plus simple et moins coûteuse à produire qu'une baleine galbée. L'expérience montre qu'elle permet de renforcer le galbe définit par l'ourlet seul.

Préférentiellement, le store est conçu de façon que :
- dans ladite position déployée, ledit ourlet s'étend sensiblement perpendiculairement au plan défini par ladite toile ;
- dans une position repliée, ledit ourlet est couché sensiblement parallèlement à ladite toile.

Ainsi, lors de l'enroulement, l'épaisseur supplémentaire induite par l'ourlet est très réduite.

Selon un mode de réalisation préférentiel de l'invention, l'ourlet peut être réalisé par deux coutures en arc de cercle pratiquées sur les portions de toile superposées. Ce mode de réalisation est particulièrement simple à mettre en oeuvre.

Préférentiellement, le bord desdites portions de toile le long duquel est formé ledit ourlet est sensiblement parallèle aux coutures.

Un tel store peut notamment être utilisé pour l'une des applications appartenant au groupe comprenant :
- occultation du pavillon dudit véhicule ;
- occultation de la vitre de custode dudit véhicule ;
- occultation d'une vitre latérale dudit véhicule ;
- cache-bagages.

L'invention concerne également les véhicules automobiles équipés d'au moins un store à enrouleur tel que décrit ci-dessus.

L'invention concerne encore un procédé de fabrication d'un tel store à enrouleur. Ce procédé comprend une étape de d'assemblage d'au moins deux portions de toile formant ladite toile, le long de l'un de leurs bords, par des coutures courbées, de façon à galber ladite toile, dans sa position déployée.

Selon un mode de réalisation avantageux, le procédé comprend plus précisément les étapes suivantes :
- superposition de deux portions de toile ;
- réalisation de deux coutures parallèles en arc de cercle, sur un bord desdites portions de toile, de façon à définir un ourlet ;
- dépliage des portions de toile superposées, de façon qu'elles soient sensiblement dans un même plan ;
- insertion d'une baleine dans le logement défini par lesdites coutures.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés parmi lesquels :
- la figure 1 illustre, de façon simplifiée, la toile d'un store à enrouleur selon l'invention, formée de deux portions de toile solidarisées par un ourlet ;
- les figures 2A et 2B illustrent deux étapes de la fabrication du store, respectivement la superposition et la réalisation d'une double couture en arc ;
- la figure 3 présente l'ourlet du store de la figure 1,de façon plus précise.

### 6. Description d'un mode de réalisation préférentiel de l'invention

L'invention repose donc sur une approche nouvelle de la fabrication des toiles de store à enrouleur, selon laquelle l'ourlet assure, au moins en partie, la mise en forme galbée de la toile.

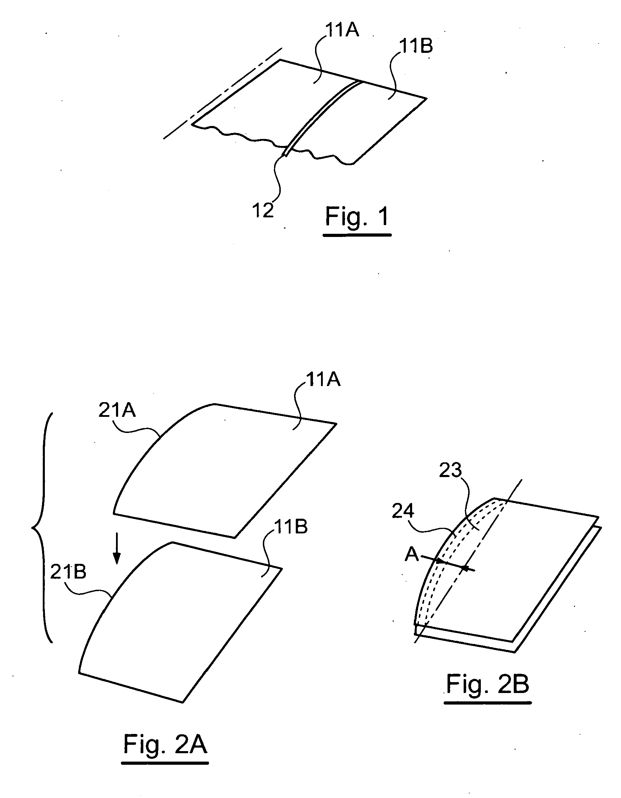

Selon un mode de réalisation particulièrement simple et efficace, la toile du store est réalisée à partir d'au moins deux portions de toile 11A, 11B, comme illustré en figure 1. C'est lors de la solidarisation de ces deux portions de toile que l'ourlet 12 de l'invention est réalisé.

Bien sûr, il est possible de réaliser plusieurs ourlets, et donc de prévoir plusieurs baleines, en ajoutant de nouvelles portions de toile. Par la suite, par souci de simplification, on présente un mode de réalisation comprenant un seul ourlet, mais l'homme du métier pourra aisément généraliser la description.

La fabrication d'une telle toile de store est particulièrement simple et aisée.

Comme illustré par la figure 2A, on commence par superposer les deux portions de toile 11A et 11B, de façon à faire coïncider les bords 21A et 21B, destinés à recevoir l'ourlet.

Préférentiellement, ces bords ont été coupés en arc de cercle ou plus généralement selon une courbe adaptée, sensiblement parallèle à l'ourlet qui va être réalisé.

La figure 2B illustre la réalisation de cet ourlet, à l'aide de deux coutures 23 et 24, selon une courbe ou un arc, prédéterminé(e). A l'aide d'une machine adaptée, les deux coutures peuvent être réalisées simultanément.

Selon un mode de réalisation particulier, la flèche A de l'arc défini par l'ourlet peut être comprise entre 3 et 6 mm, selon la largeur de la toile.

Les deux portions de toile sont désormais assemblées, et l'ourlet formé. Il suffit alors de ramener les deux portions de toile 11A et 11B dans le même plan (comme illustré par figure 1).

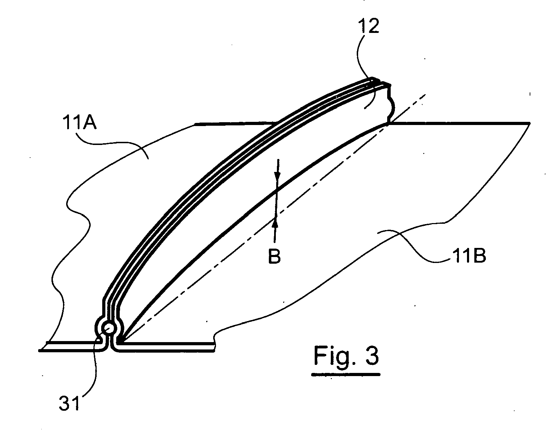

Lorsque la toile est ainsi déployée, l'ourlet se redresse sensiblement perpendiculairement au plan de la toile, comme illustré en figure 3.

Il ne reste plus qu'à insérer dans le logement défini par les deux coutures une baleine 31. Cette baleine n'a pas besoin d'être conformée de façon particulière, par exemple pour suivre la courbe des coutures 24 et 23. Au contraire, on utilise avantageusement une baleine rectiligne, par exemple une tige de 1,5 mm de diamètre en PVC ou en acier.

Lorsque la toile est déployée et tendue, la tige 31 amplifie le galbe formé par les coutures. Ainsi, pour une flèche A (figure 2B) définie par l'ourlet de l'ordre de 5 mm, on peut obtenir une flèche B (figure 3) finale de l'ordre de 15 à 20 mm.

L'invention permet donc de façon très simple et très efficace, d'obtenir un galbe relativement important, sans nécessiter de moyens complexes tels que des baleines préformées ou des rails agissant sur des baleines flexibles.

Par ailleurs, la technique de l'invention, ne perturbe pas, ou peu, l'enroulement de la toile. En effet, la baleine peut être de diamètre très limité, et l'ourlet 12 se couche naturellement parallèlement le long de la toile lors du repli de l'enroulement de cette dernière.

## Revendications

1. Store à enrouleur pour véhicule automobile, comprenant une toile d'occultation montée sur un tube enrouleur,
**caractérisé en ce que** ladite toile est constituée d'au moins deux portions de toile assemblées entre elles par des coutures le long de l'un de leurs bords,
et **en ce que** lesdites coutures définissent une courbe, de façon à galber ladite toile, dans sa position déployée.

2. Store à enrouleur selon la revendication 1, **caractérisé en ce que** lesdites coutures forment un ourlet définissant un logement incurvé, et **en ce qu'**une baleine est insérée dans ledit logement.

3. Store à enrouleur selon la revendication 2, **caractérisé en ce que** ladite baleine est rectiligne, de façon que la combinaison dudit logement incurvé et de ladite baleine rectiligne renforce le galbe de ladite toile, dans sa position déployée.

4. Store à enrouleur selon l'une quelconque des revendications 2 et 3, **caractérisé en ce que** :
- dans ladite position déployée, ledit ourlet s'étend sensiblement perpendiculairement au plan défini par ladite toile ;
- dans une position repliée, ledit ourlet est couché sensiblement parallèlement à ladite toile.

5. Store à enrouleur selon l'une quelconque des revendications 2 à 4, **caractérisé en ce que** ledit ourlet est réalisé par deux coutures en arc de cercle pratiquées sur lesdites portions de toile superposées.

6. Store à enrouleur selon l'une quelconque des revendications 1 à 5, **caractérisé en ce que** le bord desdites portions de toile le long duquel sont formées lesdites coutures est sensiblement parallèle auxdites coutures.

7. Store à enrouleur selon l'une quelconque des revendications des revendications 1 à 6, **caractérisé en ce qu'**il est utilisé pour l'une des applications appartenant au groupe comprenant :
- occultation du pavillon dudit véhicule ;
- occultation de la vitre de custode dudit véhicule ;
- occultation d'une vitre latérale dudit véhicule ;
- cache-bagages.

8. Véhicule automobile comprenant au moins un store à enrouleur selon l'une quelconque des revendications 1 à 7.

9. Procédé de fabrication d'un store à enrouleur pour véhicule automobile, comprenant une toile d'occultation montée sur un tube enrouleur et équipée d'au moins une baleine,
**caractérisé en ce qu'**il comprend une étape de d'assemblage d'au moins deux portions de toile formant ladite toile, le long de l'un de leurs bords, par des coutures courbées, de façon à galber ladite toile, dans sa position déployée.

10. Procédé de fabrication d'un store à enrouleur selon la revendication 9, **caractérisé en ce qu'**il comprend les étapes suivantes :
- superposition de deux portions de toile ;
- réalisation de deux coutures parallèles en arc de cercle, sur un bord desdites portions de toile, de façon à définir un ourlet ;
- dépliage des portions de toile superposées, de façon qu'elles soient sensiblement dans un même plan ;
- insertion d'une baleine dans le logement défini par lesdites coutures.

## Claims

1. Roller blind for a motor vehicle, comprising a concealing sheet mounted on a roller tube,
**characterized in that** said sheet consists of at least two portions of sheet assembled between them by stitching along one of their sides,
and **in that** said stitching defines a curve for curving said sheet in its deployed position.

2. Roller blind according to Claim 1, **characterized in that** said stitching forms a hem defining a curved housing, and **in that** a rib is inserted in said housing.

3. Roller blind according to Claim 2, **characterized in that** said rib is rectilinear in a manner such that the combination of said curved housing and said rectilinear rib reinforces the curve of said sheet in its deployed position.

4. Roller blind according to either of Claims 2 and 3, **characterized in that**
- in said deployed position said hem extends substantially perpendicularly to the plane defined by said sheet;
- in a folded up position, said hem lies substantially parallel to said sheet.

5. Roller blind according to any one of Claims 2 to 4, **characterized in that** said hem is produced by two seams stitched in the form of an arc of a circle on said superimposed portions of sheet.

6. Roller blind according to any one of Claims 1 to 5, **characterized in that** the side of said portions of sheet, along which said stitching is formed, is substantially parallel to said stitching.

7. Roller blind according to any one of Claims 1 to 6, **characterized in that** it is used for one of the applications belonging to the group comprising:
- concealing of the roof of said vehicle;
- concealing of the rear quarter window panel of said vehicle;
- concealing of a side window of said vehicle;
- luggage cover blind.

8. Motor vehicle comprising at least one roller blind according to any one of Claims 1 to 7.

9. Method of manufacturing a roller blind for a motor vehicle, comprising a concealing sheet mounted on a roller tube and equipped with at least one rib,
**characterized in that** it comprises an assembly step of at least two portions of sheet forming said sheet along one of their sides by curved stitching, in order to curve said sheet in its deployed position.

10. Method of manufacturing a roller blind according to Claim 9,
**characterized in that** it includes the following steps:
- superimposing two portions of sheet;
- producing two parallel seams stitched in the form of an arc of a circle, on one side of said portions of sheet in order to define a hem;
- unfolding the superimposed portions of sheet, so that they are substantially in the same plane;
- inserting a rib in the housing defined by said stitching.

## Patentansprüche

1. Rolloanndnung für Fahrzeuge mit einem auf ein Aufwickelrohr montierten Abdeckstoff,
**dadurch gekennzeichnet, dass**
dieser Stoff aus mindestens zwei Stoffabschnitten besteht, die entlang einer ihrer Kanten durch Nähte zusammengefügt sind, und dass diese Nähte eine Kurve beschreiben, so dass der Stoff in seiner ausgezogenen Stellung eine Wölbung bildet.

2. Aufwickelrollo nach Anspruch 1,
**dadurch gekennzeichnet, dass**
die Nähte einen Saum bilden, der einen gekrümmten Hohlraum definiert, und dass in diesen Hohlraum ein Stäbchen eingeschoben ist.

3. Aufwickelrollo nach Anspruch 2,
**dadurch gekennzeichnet, dass**
das Stäbchen geradlinig ist, so dass die Kombination des gekrümmten Hohlraums mit dem geradlinigen Stäbchen die Wölbung des Stoffes in seiner ausgezogenen Stellung verstärkt.

4. Aufwickelrollo nach einem der Ansprüche 2 und 3,
**dadurch gekennzeichnet, dass**
- der Saum in dieser ausgezogenen Stellung deutlich senkrecht zu der durch der Stoff definierten Ebene verläuft;
- der Saum in einer eingezogenen Stellung deutlich parallel zum Stoff liegt.

5. Aufwickelrollo nach einem der Ansprüche 2 bis 4,
**dadurch gekennzeichnet, dass**
der Saum durch zwei kreisbogenförmige Nähte an den übereinander gelegten Stoffabschnitten ausgeführt ist.

6. Aufwickelrollo nach einem der Ansprüche 1 bis 5,
**dadurch gekennzeichnet, dass**
die Kante dieser Stoffabschnitte, entlang derselben die Nähte gebildet werden, deutlich parallel zu diesen Nähten ist.

7. Aufwickelrollo nach einem der Ansprüche 1 bis 6,
**dadurch gekennzeichnet, dass**
es für eine der Anwendungen verwendet wird, die zur folgenden Gruppe gehören:
- Abdeckung des Dachs des Fahrzeugs;
- Abdeckung der Heckscheibe des Fahrzeugs;
- Abdeckung einer Seitenscheibe des Fahrzeugs;
- Gepäckraumabdeckung.

8. Kraftfahrzeug mit mindestens einem Aufwickelrollo nach einem der Ansprüche 1 bis 7.

9. Verfahren zur Herstellung eines Aufwickelrollos für Kraftfahrzeuge mit einem auf einem Aufwickelrohr montierten Abdeckstoff und mit mindestens einem Stäbchen,
**dadurch gekennzeichnet, dass**
es einen Schritt des Zusammenfügens von mindestens zwei Stoffabschnitten entlang einer ihrer Kanten durch gekrümmte Nähte aufweist, die den Stoff bilden, so dass der Stoff in seiner ausgezogenen Stellung eine Wölbung bildet.

10. Verfahren zur Herstellung eines Aufwickelrollos gemäß Anspruch 9,
**dadurch gekennzeichnet, dass**
es die folgenden Schritte umfasst:
- Überlagern von zwei Stoffabschnitten;
- Bilden von zwei parallelen, kreisbogenförmigen Nähten an einer Kante dieser Stoffabschnitte, so dass ein Saum gebildet wird;
- Falten der übereinander gelagerten Stoffabschnitte, so dass sie deutlich in einer selben Ebene liegen;
- Einschieben eines Stäbchens in den durch die Nähte gebildeten Hohlraum.
